Europäisches Patentamt

European Patent Office

Office européen des brevets

(11) Numéro de publication: **0 403 390**
**A1**

## (12) DEMANDE DE BREVET EUROPEEN

(21) Numéro de dépôt: **90401658.1**

(22) Date de dépôt: **14.06.90**

(51) Int. Cl.⁵: **G05D 1/03, G05D 1/02**

(30) Priorité: **16.06.89 FR 8908049**

(43) Date de publication de la demande:
**19.12.90 Bulletin 90/51**

(84) Etats contractants désignés:
**CH DE ES FR GB IT LI SE**

(71) Demandeur: **COMMISSARIAT A L'ENERGIE ATOMIQUE Etablissement de Caractère Scientifique Technique et Industriel**
**31/33, rue de la Fédération**
**F-75015 Paris(FR)**

(72) Inventeur: **Detriche, Jean-Marie**
**Résidence Gaillarderie**
**F-78590 Noisy Le Roi(FR)**
Inventeur: **Micaelli, Alain**
**9, rue Durand Bénech**
**F-92260 Fontenay aux Roses(FR)**

(74) Mandataire: **Signore, Robert et al**
**c/o BREVATOME 25, rue de Ponthieu**
**F-75008 Paris(FR)**

(54) **Procédé de création et de suivi d'une trajectoire pour un véhicule tel qu'un robot.**

(57) Procédé automatique de création et de suivi d'une trajectoire définie par des points de repérage (P) dont la position est connue dans un repère fixe dans le site d'évolution d'un véhicule.

La trajectoire est créée automatiquement ou en la faisant suivre manuellement au véhicule et en effectuant alors des localisations périodiques de balises de position connue dans le repère. Selon l'invention, la trajectoire est stockée en mémoire sous forme de coordonnées cartésiennes de points uniquement et d'un modèle de la trajectoire qui n'inclut aucune information d'orientation.

## FIG. 4

L'invention se rapporte à un procédé de création et de suivi d'une trajectoire pour un véhicule tel qu'un robot.

De nombreux robots se déplacent en répétant des trajectoires immuables qu'ils doivent mémoriser. Les trajectoires simples peuvent être décomposées en tronçons enseignés au robot. Cependant, pour les trajectoires plus complexes, on préfère lui enseigner la position d'un certain nombre de points de repérage appartenant à la trajectoire afin de réduire le volume de données mémorisées. C'est notamment le cas pour un robot de surveillance qui se déplace sur un chemin de ronde faisant le tour d'un site à surveiller.

L'apprentissage se fait souvent en parcourant la trajectoire à vitesse réduite sous l'action d'un pilote qui commande les déplacements du véhicule. Les points à mémoriser sont sélectionnés par le véhicule lui-même suivant des critères spatiaux ou temporels : on peut ainsi effectuer une mesure de la position du véhicule après qu'une distance déterminée a été parcourue, ou qu'un intervalle de temps déterminé s'est écoulé, depuis la mesure précédente.

Les données de position des points de mesure sont mémorisées sous diverses formes par le robot suivant les capteurs utilisés. On peut ainsi citer une méthode odométrique dans laquelle on utilise des capteurs tels que des roues codeuses roulant sur le sol dont les relevés sont intégrés et comparés. Les points de la trajectoire sont donc connus par les déplacements relatifs des roues à effectuer pour les atteindre.

Cette méthode présente le double inconvénient de rendre peu commode une modification de la trajectoire puisque toutes les informations mémorisées concernent des déplacements relatifs, et surtout d'être très incertaine car les capteurs d'odométrie ne sont pas fiables sur de longues distances. Les roues codeuses sont par exemple sensibles aux aspérités et aux débris qui se trouvent sur le sol.

Une variante de cette méthode dans laquelle on convertit les informations de déplacement en informations de coordonnées cartésiennes de points de la trajectoire n'évite que le premier inconvénient et dépend fortement de la position réelle de départ du véhicule et notamment de son orientation. Aucun repère fixe n'est défini en réalité.

Une autre méthode consiste à définir la trajectoire par des informations de cap ou d'orientation. Comme ces informations ne peuvent être fournies par des systèmes de capteur d'odométrie qu'avec une incertitude particulièrement élevée, on incorpore au véhicule un capteur de cap. Mais les capteurs de cap ne sont eux-mêmes pas parfaitement fiables : les capteurs magnétiques sont perturbés par des masses magnétiques sur la trajectoire et les gyroscopes sont soumis à des dérives avec le temps.

Avec l'invention, on vise à s'affranchir de ces imprécisions. On utilise un véhicule muni de capteurs -un seul peut éventuellement suffire- de localisation absolue de balises dont la position est connue par rapport au site sur lequel la trajectoire est décrite. La trajectoire est connue du véhicule par un certain nombre de points définis par leurs coordonnées cartésiennes dans un repère lié au site d'évolution. Contrairement à ce qui se passe avec des capteurs odométriques, où on ne peut obtenir que des coordonnées définies dans un repère lié à la position d'origine du robot, une grande précision peut être obtenue. Aucune information d'orientation du véhicule n'est mémorisée.

Il est possible de remodeler la trajectoire en éliminant un certain nombre des points définissant la courbe ou au contraire en modélisant la trajectoire sous forme de courbe analytique passant par les points qui la définissent, puis en choisissant des points de modélisation supplémentaires sur la courbe et en calculant leurs coordonnées cartésiennes dans le repère fixe avant de les enseigner au véhicule.

L'invention s'applique à des véhicules circulant dans un environnement relativement dégagé dans lequel ils effectuent des trajectoires bien déterminées et qui peuvent être modifiées de temps en temps. Il faut la distinguer de systèmes où la trajectoire est un balayage non défini à l'avance ou un parcours de couloirs, car les impératifs de précision sont alors moins grands et les inconvénients des procédés décrits ci-dessus moins aigus.

C'est ainsi que le brevet EP-A-0 142 594 concerne un robot de balayage où une surface rectangulaire est entièrement parcourue par bandes parallèles. Le robot commence par parcourir le périmètre de la surface en évaluant les coordonnées des coins grâce à des capteurs de déplacement et de cap, après quoi l'intérieur du périmètre est parcouru sans définition de la trajectoire. Des capteurs d'obstacles permettent simplement de commander des demi-tours quand un obstacle frontal est détecté. Il n'y a pas de repère fixe utilisable pour des localisations absolues ni de balises.

L'abrégé du brevet japonais de numéro de publication 63 062006 décrit un système de création automatique d'une trajectoire pour un véhicule mobile dans des couloirs. Les coordonnées cartésiennes de points de passage sont calculées pour définir la trajectoire, mais ces données subissent ensuite une conversion et sont enseignées au véhicule sous forme de distances de jonction stockées dans sa mémoire.

Un procédé de suivi ou de "restitution" conforme à l'invention et adapté au procédé de création de la trajectoire et utilisable pour un véhicule équipé d'un capteur de cap et d'un capteur de localisation de balises de position connue consiste à détecter l'arrivée du véhicule sur chaque point de localisation au moyen de localisations des balises, à calculer l'orientation théorique du véhicule au point de localisation à l'aide des coordonnées des points de localisation, à corriger l'information d'orientation fournie à ce moment par le capteur de cap, en la rendant égale à l'orientation théorique calculée, et à diriger le véhicule vers le point de localisation suivant à l'aide des informations du capteur de cap.

Si le véhicule est en outre équipé d'un capteur de déplacement, la trajectoire peut être également modélisée par des points intermédiaires entre les points de localisation. Les coordonnées cartésiennes de ces points intermédiaires sont également connues du véhicule. Le procédé de suivi consiste alors à détecter l'arrivée du véhicule sur chaque point intermédiaire en constatant l'égalité d'une distance de parcours théorique, calculée à l'aide des coordonnées des points de la trajectoire, et d'une distance de parcours mesurée fournie par le capteur de déplacement, à calculer alors l'orientation théorique du véhicule et à comparer cette orientation théorique à l'information d'orientation fournie à ce moment par le capteur de cap ; et, aux points de localisation, à corriger la distance de parcours mesurée en la rendant égale à la distance de parcours théorique.

L'invention va être décrite plus en détail à l'aide des figures suivantes, données à titre illustratif et non limitatif :

   - les figures 1 à 3 décrivent trois sortes de balises et de capteurs de localisation absolue qui leur sont adaptés ;

   - la figure 4 représente une trajectoire ;

   - la figure 5 est un organigramme de création de trajectoire ;

   - la figure 6 est un organigramme de remodelage de la trajectoire ;

   - la figure 7 représente un véhicule équipé pour suivre la trajectoire ;

   - la figure 8 est un organigramme de suivi ; et

   - la figure 9 représente une modification possible de trajectoire.

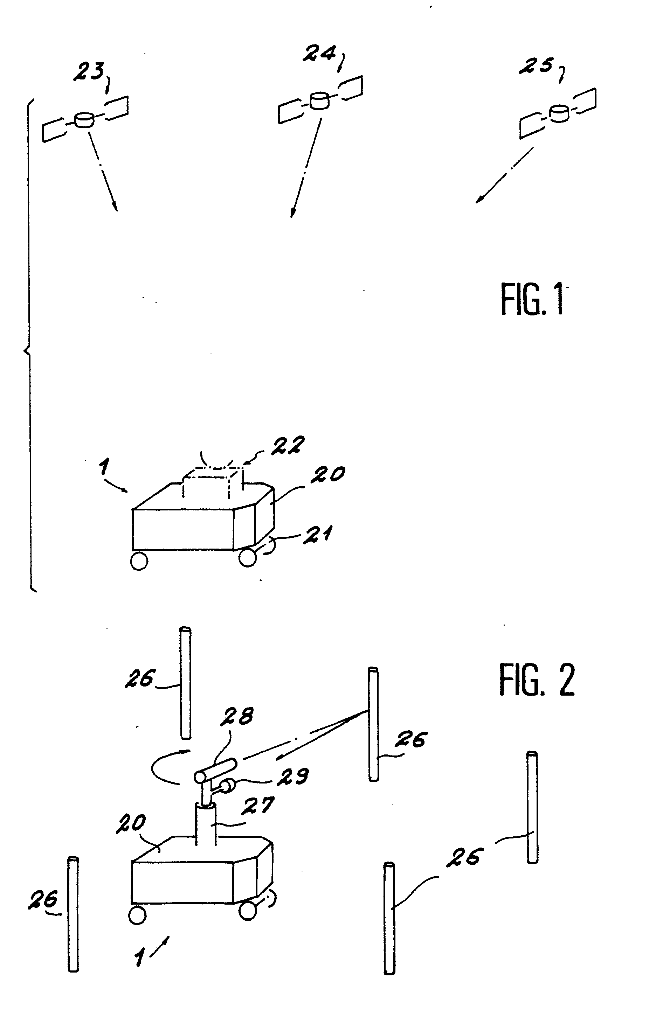

On va tout d'abord décrire les principaux modes d'obtention envisageables de la trajectoire. On utilise pour cela un véhicule robotisé (appelé ci-après de manière abrégée "robot") tel que celui référencé par 1 sur la figure 1. Le robot 1 peut être grossièrement décomposé en un chassis 20 supporté par exemple par deux paires de roues 21 orientables. Le châssis 20 contient les divers capteurs, les systèmes moteurs et de direction et le système de pilotage automatique qui comprend en particulier un ordinateur et des mémoires.

La création de la trajectoire nécessite des capteurs offrant des informations absolues, c'est-à-dire liées au site et non aux déplacements du robot 1. Un capteur de localisation absolue envisageable. (figure 1) est un récepteur radiophonique 22 à bord du châssis 20 qui peut capter les signaux provenant de trois satellites géostationnaires 23, 24 et 25. Des techniques ont déjà été développées d'après lesquelles la position du robot 1 peut être connue à quelques mètres près en comparant les signaux reçus des trois satellites 23, 24 et 25 et en effectuant une triangulation. On peut mesurer pour cela les effets Doppler s'exerçant sur les signaux.

Un autre procédé déjà connu (figure 2) consiste à utiliser comme balises des poteaux réflecteurs 26 non loin de la trajectoire à suivre. Le capteur est alors monté sur une tourelle tournant autour d'un axe vertical 27 au sommet du châssis 20. Il se compose d'un laser 28 et d'un détecteur lumineux 29. Quand le faisceau laser atteint un des poteaux 26, il se réfléchit vers le détecteur 29 qui enregistre donc l'orientation de ce poteau 26 par rapport au robot 1. La répétition de ce repérage pour tous les poteaux 26 environnants permet de fournir la position et l'orientation du robot 1 si la répartition des poteaux 26 est connue. En pratique, il est toutefois difficile d'utiliser tel quel ce système dès que le nombre de poteaux 26 devient important : on répartit alors les poteaux 26 en groupes dans des secteurs adjacents et on adjoint au système de détection un capteur de déplacement qui permet de lever l'indétermination en indiquant dans quel secteur on se trouve.

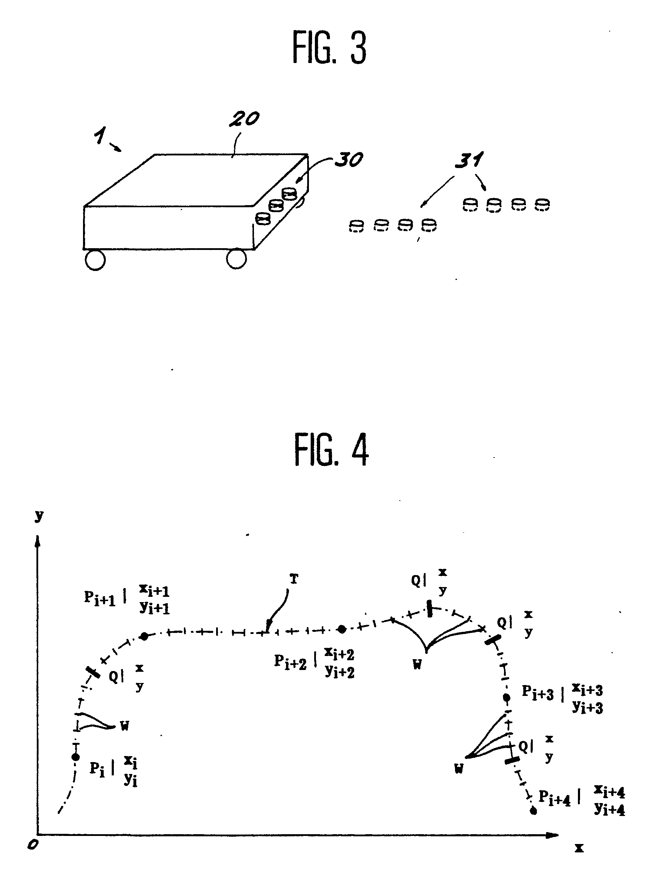

La figure 3 montre que l'on peut encore envisager des capteurs magnétiques 30 disposés sous le châssis 20 en au moins une rangée transversale. Les balises sont ici des séries de bornes magnétiques enterrées dans le sol et formées d'aimants permanents 31. Ce système est simple et fiable mais moins souple que les précédents car le robot 1 doit absolument passer au-dessus des bornes magnétiques sous peine de s'égarer complètement. Ses possibilités d'évolution sont donc limitées. Par ailleurs, la localisation n'est effective que si toutes les bornes magnétiques 31 sont différentes entre elles par le nombre ou la polarité des aimants ou si un capteur supplémentaire tel qu'un capteur de déplacement fournit au robot 1 une indication pour les distinguer.

Dans tous les cas, il est possible d'obtenir une modélisation particulièrement simple et avantageuse d'une trajectoire à l'aide de ces capteurs de localisation absolue et de ces balises avec une grande précision du fait que ces balises sont quasi ponctuelles. Comme le représente la figure 4, la trajectoire T peut être définie par un certain nombre de points $P_i$, $P_{i+1}$, etc. chacun défini par un couple de coordonnées cartésiennes $X_i$, $Y_i$, $X_{i+1}$, $Y_{i+1}$, etc. dans un repère O,x,y fixe par rapport au site. Quand les points ont été définis et leurs coordonnées calculées, on obtient des tables de coordonnées qui sont enseignées au système de commande du robot 1. Par contre, aucune information d'orientation n'est mémorisée par le robot 1 par un quelconque capteur.

D'autres informations de modélisation permettent de définir complètement la trajectoire. Il peut s'agir en particulier de l'ordre de parcours sur la trajectorie des points dont les coordonnées sont stockées dans les tables. On peut encore donner des informations sur le type de trajectoire parcourue afin de commander par exemple un déplacement en ligne droite ou à rayon de courbure déterminé entre deux points, de même que des informations sur des tâches particulières à accomplir. Une possibilité importante est la modélisation de la trajectoire sous forme d'une courbe lisse, c'est-à-dire sans variation brusque de la direction.

Le recours à des coordonnées cartésiennes absolues permet de modifier sans difficulté la trajectoire. Il suffit par exemple de stocker une fois pour toutes dans les tables les coordonnées d'un grand nombre de points. Les modifications sont produites en sélectionnant différents groupes de points sans changer les tables de coordonnées.

Il existe de nombreuses façons de créer ces tables de coordonnées et ce modèle de trajectoire. On peut tout d'abord se servir d'un logiciel spécialisé fonctionnant à l'aide d'une table de digitalisation. Les logiciels existants permettent de dessiner la trajectoire sur l'écran par un moyen graphique quelconque ou même de la créer automatiquement en fonction des obstacles à éviter et des possibilités de direction et d'accès offertes au véhicule et des endroits par lesquels il doit passer.

Le logiciel détermine ensuite automatiquement par un procédé d'échantillonnage les points de la trajectoire qui doivent être sélectionnés.

Il est également possible de recourir à une méthode d'apprentissage en déplaçant manuellement le robot 1 le long de la trajectoire. On se sert alors des balises et des capteurs de localisation. Avec les systèmes tels que ceux des figures 1 et 2, il est possible d'effectuer périodiquement des localisations. Les points de la trajectoire à enregistrer correspondent alors aux positions du robot 1 au moment des localisations. Les localisations peuvent être commandées par l'opérateur ou s'effectuer automatiquement.

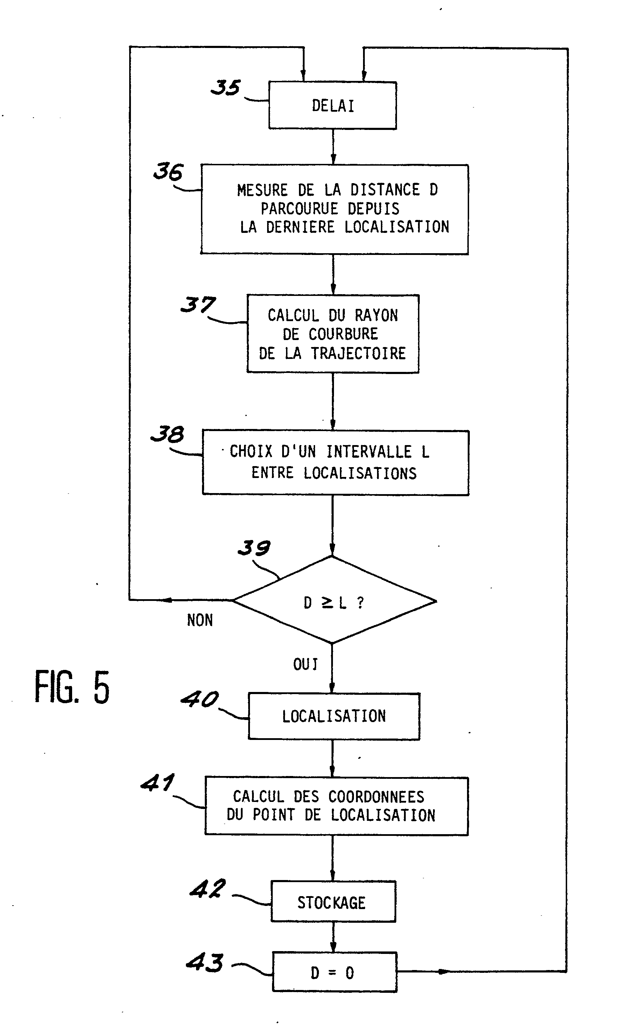

On peut par exemple proposer l'organigramme de la figure 5. Une horloge interne incorporée au système de commande égrène des délais à l'étape 35. Au cours de l'étape suivante 36, on mesure, à l'aide d'un capteur de déplacement, une mesure de la distance parcourue depuis la dernière localisation et notée D. On effectue ensuite une évaluation du rayon de courbure de la trajectoire 37 en mesurant l'angle de braquage dans le cas d'un robot 1 à roues ou la différence de vitesse des chenilles dans le cas d'un robot à chenilles. On peut ensuite définir en fonction de ce rayon de courbure un intervalle L entre deux localisations : cet intervalle pourra être assez grand quand le robot 1 se déplace en ligne droite mais devra être beaucoup plus faible dans un virage serré.

L'étape 39 est une discrimination. Si D est inférieure à L, on revient à l'étape 35 car l'intervalle L n'a pas été parcouru. Dans le cas contraire, il est temps de recourir à une localisation 40 au moyen du capteur de localisation absolue. Un calcul des coordonnées du point de localisation 41 s'ensuit, après quoi ces coordonnées sont stockées au cours de l'étape 42 dans la mémoire du système de commande. Une remise à zéro de la distance D a alors lieu à l'étape 43, et on revient à l'étape 35.

On a décrit un procédé de choix des points représentatifs de la trajectoire par un critère spatial. On peut recourir à un critère temporel, c'est-à-dire effectuer des localisations à intervalles de temps déterminés. Par ailleurs, il n'est pas nécessaire d'adapter le critère à des facteurs tels que le rayon de courbure de la trajectoire. Il est possible au lieu de cela d'effectuer des localisations en nombre important. Quand toutes les données de coordonnées ont été stockées, on recourt alors avantageusement à ce qu'on appelle une compression de données consistant à éliminer des tables de coordonnées celles d'un certain nombre de points qui ne fournissent pas d'informations intéressantes, notamment les points situés sur des tronçons rectilignes de la trajectoire.

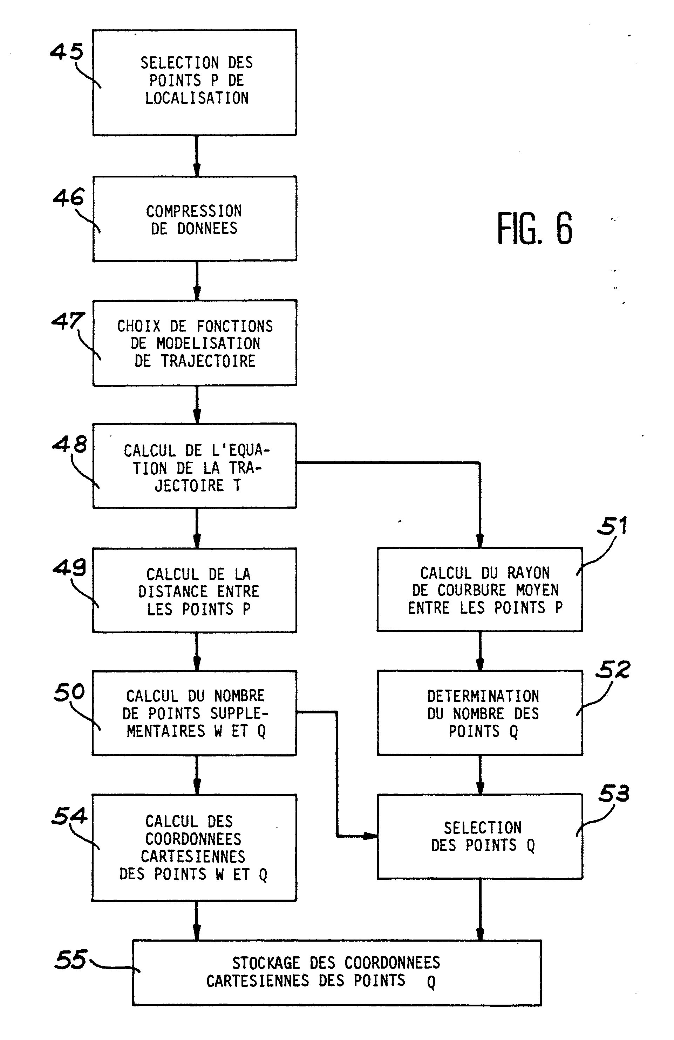

Une variante du procédé d'après laquelle on crée également des points supplémentaires aux points P déjà obtenus et dont les coordonnées ont été enseignées au robot par un des procédés mentionnés et décrits plus haut fait également partie de l'invention. Un exemple d'organigramme correspondant à de tels remodelages de la trajectoire est détaillé figure 6. La première étape 45 correspond à une sélection des points P de localisation. Un critère de sélection consiste à calculer par leurs coordonnées cartésiennes les distances entre les points P consécutifs pour éliminer ceux qui sont trop rapprochés ou, après avoir calculé les angles que font les segments reliant des points P consécutifs, à éliminer ceux qui sont pratiquement alignés. Dès que la sélection a été opérée, une étape de compression de données 46 efface les coordonnées des points éliminées des tables de stockage.

L'étape suivante 47 consiste à choisir une modélisation pour définir une trajectoire idéale, référencée T sur la figure 4. Cette trajectoire idéale peut prendre des allures variées en fonction des possibilités d'évolution du robot et des capteurs embarqués. On peut par exemple modéliser la trajectoire idéale sous forme de segments rectilignes ou à rayon de courbure constant joignant les points P ; d'une façon générale, on peut utiliser une ou plusieurs fonctions polynômiales y = f(x) joignant les points P et dont le degré est choisi par l'utilisateur. L'idéal est évidemment une trajectoire T sans points anguleux, c'est-à-dire dont la fonction ou les fonctions de modélisation admettent des dérivées continues.

Une fois qu'un type de fonction de modélisation a été choisi, les équations de la fonction ou des fonctions de modélisation sont calculées au cours d'une étape suivante 48. Dans le cas de fonctions polynômiales, on résout les systèmes d'équations établis en faisant passer les fonctions par les points P et en calculant les coefficients du polynôme.

Il est alors possible de calculer simultanément les abscisses curvilignes et les rayons de courbure sur la trajectoire T, et plus précisément de calculer les distances entre les points P en suivant la trajectoire et le rayon de courbure moyen entre ces mêmes points (étapes 49 et 51).

Les points supplémentaires, référencés W et Q, sont créés au cours de l'étape suivante 50. Leur nombre et leur position sont choisis pour décomposer la trajectoire T en tronçons de longueur sensiblement uniforme proche d'une longueur d'échantillonnage choisie par l'utilisateur. Le calcul des coordonnées cartésiennes des points supplémentaires W et Q en fonction de ces critères est effectué au cours de l'étape 54.

Le rayon de courbure moyen de la trajectoire T entre les paires de points P sert à déterminer (étape 52) le nombre des points Q, sélectionnés parmi les points supplémentaires et destinés au même rôle que les points P lors du suivi de la trajectoire T par le robot. La figure 4 représente ainsi un tronçon sensiblement rectiligne entre les points $P_{i+1}$ et $P_{i+2}$ qui est dépourvu de points Q, deux tronçons à inflexion de direction entre $P_i$ et $P_{i+1}$ ainsi qu'entre $P_{i+3}$ et $P_{i+4}$ pourvus d'un point Q et un tronçon de virage à angle droit entre $P_{i+2}$ et $P_{i+3}$ pourvu de deux points Q.

La sélection des points Q parmi les points supplémentaires s'effectue au cours de l'étape 53 de manière que les points Q divisent les parties de la trajectoire T en fragments de longueur sensiblement égale entre les paires de points P.

La dernière étape représentée en 55 consiste à stocker les coordonnées cartésiennes des points supplémentaires Q parmi les tables de stockage pour les enseigner au robot dans les mêmes conditions que celles des points P. Les coordonnées des points supplémentaires W ne sont pas mémorisées mais recalculées au cours de la restitution de la trajectoire à l'aide des points P et Q et de la forme de la trajectoire.

On constate donc qu'il est possible d'améliorer nettement et facilement la modélisation de la trajectoire tout en remodelant sa forme. D'autres critères de sélection, de modélisation et de calcul peuvent évidemment être adoptés.

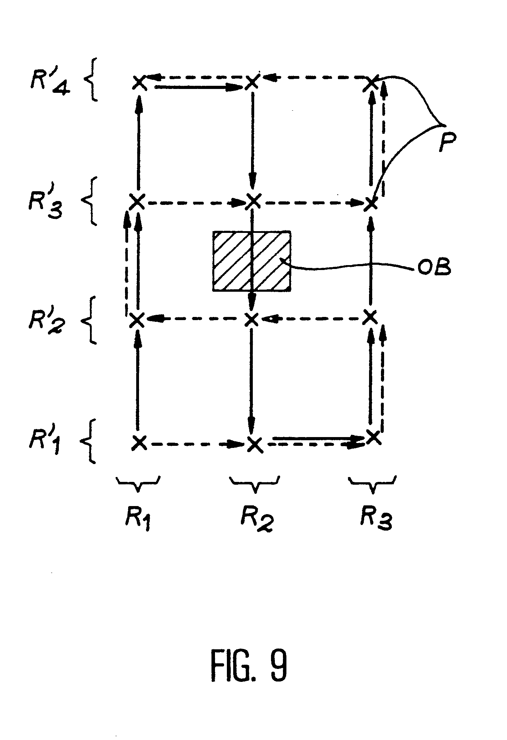

Le commentaire de la figure 9 qui va maintenant être fait montre que le système de modélisation d'une trajectoire par les coordonnées absolues de points autorise des modifications aisées de cette trajectoire. On a représenté un groupe de douze points P disposés suivant un maillage carré pour former un rectangle constitué de trois rangées parallèles $R_1$ à $R_3$ et de quatre travées parallèles $R'_1$ à $R'_4$ perpendiculaires aux rangées $R_1$ à $R_3$. La mission du robot 1 (non représenté sur cette figure) est d'effectuer une reconnaissance passant par tous ces points. La trajectoire normale, en traits pleins, lui fait parcourir successivement toutes les rangées en sens alternés. Si maintenant l'aménagement du site est modifié et qu'un obstacle OB vient interrompre une des rangées $R_2$, il suffit de modifier l'ordre de parcours des points P tel qu'il a été enseigné au robot 1 pour que celui-ci, quand il effectuera une nouvelle mission, balaye le site suivant une trajectoire modifiée complètement différente mais de même longueur, en pointillés, qui lui fasse parcourir successivement toutes les travées $R'_1$ à $R'_4$ en sens alternés.

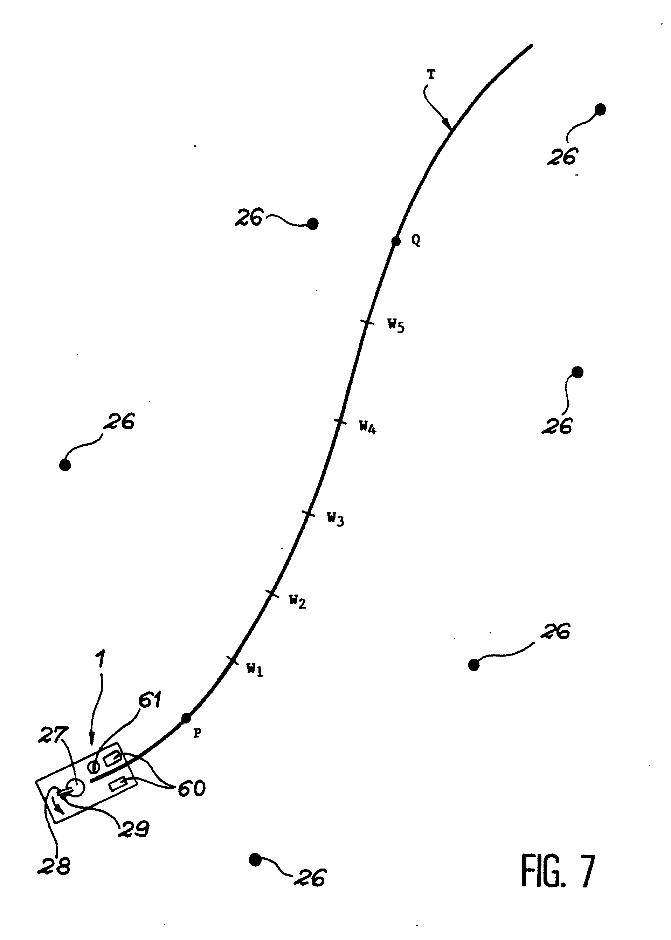

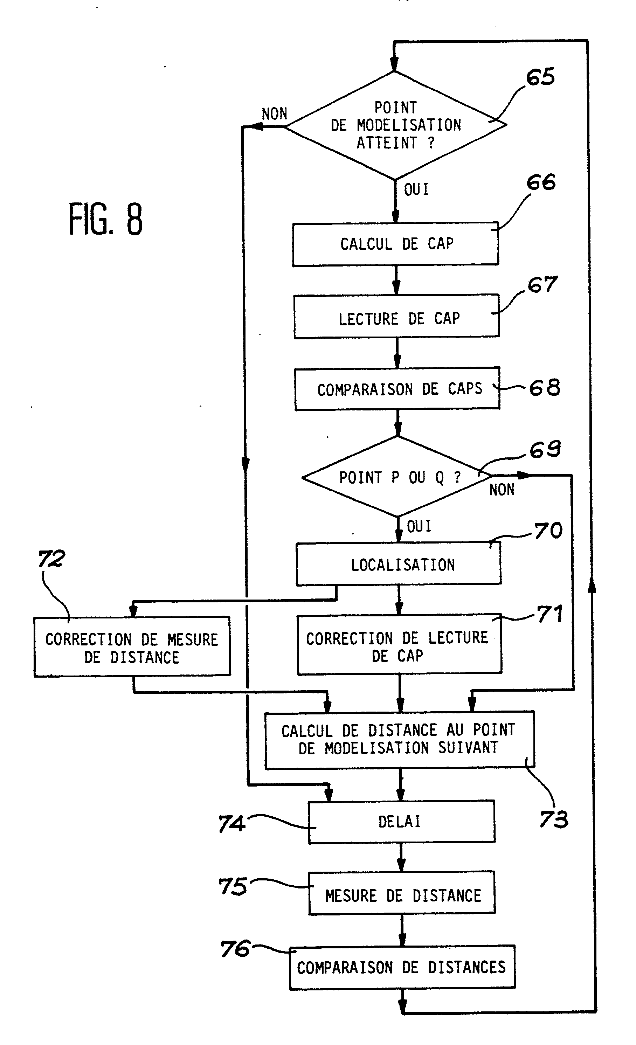

Un procédé nouveau de restitution ou de suivi de la trajectoire T par le robot, particulièrement efficace en liaison avec le procédé de création de trajectoire décrit jusqu'ici, va maintenant être décrit à l'aide des figures 7 et 8. La figure 7 représente le robot 1 parcourant la trajectoire T définie par ses points de modélisation P, Q et W (ici $W_1$ à $W_5$) dans un environnement constellé de poteaux 26 tels que décrits sur la figure 2 et qui définissent le repère fixe dans lequel les coordonnées des points de modélisation ont été calculées. Le robot 1 est équipé d'un axe vertical 27 tournant porteur d'un laser 28 et d'un détecteur lumineux 29 constituant ensemble un capteur de localisation absolue, d'un capteur relatif de déplacement 60 constitué d'une paire de roues codeuses situées l'une à gauche et l'autre à droite du robot 1 et dont les informations sont comparées pour fournir des indications de la distance parcourue, et enfin d'un capteur relatif de cap 61 tel qu'une boussole ou un gyroscope.

Lorsqu'un point de modélisation P, Q ou W est atteint, on se trouve à l'étape 65 de l'organigramme de la figure 8. On effectue alors à l'étape 66 un calcul du cap théorique que le robot 1 doit suivre en se servant des coordonnées cartésiennes du point de modélisation atteint et des points de modélisation voisins, qui correspond à la tangente à la trajectoire T. Une lecture du cap réel suivi 67 est simultanément effectuée grâce au capteur de cap 61 et une comparaison 68 du cap théorique et du cap réel est entreprise, mais il faut encore déterminer en une étape 69 si l'on se trouve en un point P ou Q avant de prendre une décision. Dans l'affirmative, après avoir effectué une localisation 70 à l'aide du capteur de localisation absolue pour vérifier que le robot 1 se trouve effectivement au point P ou Q considéré, les informations provenant du capteur de cap 61 sont corrigées au cours d'une étape 71 pour être rendues égales au cap théorique. De même, on corrige simultanément au cours d'une étape 72 l'information de distance parcourue sur la trajectoire T par les roues codeuses 60 pour rendre cette information égale à l'abscisse curviligne de la trajectoire T jusqu'au point de modélisation P ou Q atteint.

Si la localisation 70 prouve que le robot 1 s'est éloigné de la trajectoire T et n'est pas au point P ou Q, on ne procède à aucune correction et on applique un procédé de recalage pour le ramener sur la trajectoire T.

L'étape 73 comprend un calcul de distance à parcourir jusqu'au point de modélisation (ici $W_1$) suivant de la trajectoire T et est entreprise quel que soit le point de modélisation atteint P, Q ou W. On laisse ensuite s'écouler un délai 74, puis une mesure de distance 75 est effectuée. Une comparaison 76 de la distance parcourue par le robot 1 et de la distance calculée jusqu'au point de modélisation suivant est entreprise. Si ces distances coïncident, le point de modélisation en question est atteint et on se retrouve à l'étape 65. Dans la négative, le programme laisse s'écouler un nouveau délai 74 avant de procéder à une nouvelle mesure de distance 75.

Lorsqu'un point W de modélisation est atteint, la comparaison 68 du cap théorique obtenu par calcul sur les points de la trajectoire et du cap lu sur le capteur 61 constitue une vérification qui amène éventuellement à appliquer un procédé de recalage 1 sur la trajectoire T au robot 1, mais aucune correction des informations lues sur les capteurs relatifs n'est entreprise et l'étape 73 succède directement à l'étape 69.

Le procédé décrit de suivi de la trajectoire T permet de saisir et de traiter des informations suffisamment précises sans être trop nombreuses et nécessiter des ralentissements ou des arrêts du robot. Les localisations absolues nécessitent en effet des calculs relativement longs et il convient de les raréfier, alors que les mesures par les capteurs relatifs sont sujettes à des dérives mais d'exploitation plus simple.

C'est pourquoi seuls les capteurs relatifs sont utilisés pour suivre l'évolution du robot aux points de modélisation W qui sont généralement de loin les plus nombreux en pratique. Les points P et Q de localisation absolue sont en fait espacés d'intervalles au-delà desquels l'utilisation exclusive des capteurs relatifs serait susceptible de conduire à des imprécisions inadmissibles.

Quand une localisation satisfaisante a lieu, on connaît avec précision la position du robot mais aussi en pratique le cap qu'il suit, constitué par la tangente à la trajectoire T. Il est donc possible de corriger périodiquement les informations du capteur de cap 61 et d'éliminer les dérives de ce capteur au fur et à mesure qu'elles apparaissent. De même, quand un point P ou Q de localisation absolue est atteint, l'indication de distance parcourue qui est fournie par les roues codeuses 60 devient inutile et cette information peut être corrigée pour être rendue égale à l'abscisse curviligne sur la trajectoire T jusqu'au point de localisation absolue atteint, quel qu'ait été le trajet réel du robot auparavant.

Le mode de pilotage du robot 1 et de commande de ses organes locomoteurs à l'aide des mesures et des localisations aux points de modélisation ne fait pas partie de l'invention et ne sera donc pas décrit ici, où on s'assure simplement d'une restitution correcte de la trajectoire T.

Un avantage fondamental de l'invention, la précision, la rend très utile pour des trajectoires de grande longueur sur terrain difficile ou accidenté. On remarquera enfin que, quoique seules des applications comportant des trajectoires planes aient été décrites ici, l'invention pourrait s'appliquer à des trajectoires tridimensionnelles. Les tables de coordonnées devraient alors évidemment permettre le stockage de trois composantes pour chaque point.

## Revendications

1. Procédé de création d'une trajectoire sur un site d'évolution pour un véhicule muni de capteurs de localisation (22, 29, 30) localisant des balises (23, 24, 25, 26, 31) de position connue par rapport au site, caractérisé en ce qu'il consiste à définir un repère fixe (O,x,y) par rapport au site, à déterminer les coordonnées cartésiennes dans le repère fixe de points définissant la trajectoire, et à enseigner ces coordonnées au véhicule ainsi que des informations de modélisation de la trajectoire passant par ces points, ces informations ne comprenant pas d'informations d'orientation.

2. Procédé de création d'une trajectoire selon la revendication 1, caractérisé en ce que les informations de modélisation comportent l'ordre suivant lequel les points définissant la trajectoire sont parcourus par le véhicule.

3. Procédé de création d'un trajectoire selon l'une quelconque des revendications 1 ou 2, caractérisé en ce que les informations de modélisation comportent des informations sur la courbure de tronçons de la trajectoire entre des points définissant celle-ci.

4. Procédé de création d'une trajectoire selon la revendication 1, caractérisé en ce qu'il consiste à faire suivre manuellement la trajectoire au véhicule après avoir enseigné au véhicule la position des balises dans le repère fixe, à faire effectuer des localisations des balises par les capteurs et à calculer les coordonnées cartésiennes des emplacements où le véhicule se trouve lors des localisations.

5. Procédé de création d'une trajectoire selon l'une quelconque des revendications 1 à 4, caractérisé en ce qu'il comprend une étape d'élimination de certains des points.

6. Procédé de creation d'une trajectoire selon l'une quelconque des revendications 1 à 5, caractérisé en ce qu'il comprend une étape de création de points intermédiaires (Q, W) en modélisant la trajectoire sous forme de courbe analytique passant par les points (P) dont les coordonnées ont déjà été calculées, puis en choisissant les points supplémentaires sur la courbe et en calculant leurs coordonnées cartésiennes dans le repère fixe, et enfin en enseignant les coordonnées de certains au moins des points supplémentaires au véhicule.

7. Procédé automatique de suivi d'une trajectoire par un véhicule équipé d'un capteur de cap (61) et d'un capteur de localisation de balises de position connue dans un repère fixe par rapport au site d'évolution du véhicule, la trajectoire étant définie par les coordonnées cartésiennes, exprimées dans le repère fixe et enseignées au véhicule, de points de localisation (P, Q), caractérisé en ce qu'il consiste à détecter l'arrivée du véhicule sur chaque point de localisation au moyen de localisations des balises, à calculer l'orientation théorique du véhicule au point de localisation à l'aide des coordonnées des points de localisation, à corriger l'information d'orientation fournie à ce moment par le capteur de cap, en la rendant égale à l'orientation théorique calculée, et à diriger le véhicule vers le point de localisation suivant à l'aide des informations du capteur de cap.

8. Procédé selon la revendication 6, dans lequel le véhicule est en outre équipé d'un capteur de déplacement (60), caractérisé en ce que la trajectoire est également définie par les coordonnées cartésiennes, exprimées dans le repère fixe et enseignées au véhicule, de points intermédiaires (W) disposés entre les points de localisation (P, Q) et en ce que le procédé consiste, entre deux points de localisation, à détecter l'arrivée du véhicule sur chaque point intermédiaire en constatant l'égalité d'une distance de parcours théorique, calculée à l'aide des coordonnées des points de la trajectoire, et d'une distance de parcours mesurée fournie par le capteur de déplacement, à calculer alors l'orientation théorique du véhicule et à comparer cette orientation théorique à l'information d'orientation fournie à ce moment par le capteur de cap ; et, aux points de localisation, à corriger la distance de parcours mesurée en la rendant égale à la distance de parcours théorique.

FIG. 1

FIG. 2

# FIG. 3

# FIG. 4

**FIG. 5**

35 → DELAI

36 → MESURE DE LA DISTANCE D
PARCOURUE DEPUIS
LA DERNIERE LOCALISATION

37 → CALCUL DU RAYON
DE COURBURE
DE LA TRAJECTOIRE

38 → CHOIX D'UN INTERVALLE L
ENTRE LOCALISATIONS

39 → $D \geq L$ ?

NON

OUI

40 → LOCALISATION

41 → CALCUL DES COORDONNEES
DU POINT DE LOCALISATION

42 → STOCKAGE

43 → $D = 0$

**FIG. 6**

45 — SELECTION DES POINTS P DE LOCALISATION

46 — COMPRESSION DE DONNEES

47 — CHOIX DE FONCTIONS DE MODELISATION DE TRAJECTOIRE

48 — CALCUL DE L'EQUATION DE LA TRAJECTOIRE T

49 — CALCUL DE LA DISTANCE ENTRE LES POINTS P

51 — CALCUL DU RAYON DE COURBURE MOYEN ENTRE LES POINTS P

50 — CALCUL DU NOMBRE DE POINTS SUPPLEMENTAIRES W ET Q

52 — DETERMINATION DU NOMBRE DES POINTS Q

54 — CALCUL DES COORDONNEES CARTESIENNES DES POINTS W ET Q

53 — SELECTION DES POINTS Q

55 — STOCKAGE DES COORDONNEES CARTESIENNES DES POINTS Q

FIG. 7

EP 0 403 390 A1

FIG. 8

Flowchart:

65 — POINT DE MODELISATION ATTEINT ? (NON / OUI)

66 — CALCUL DE CAP

67 — LECTURE DE CAP

68 — COMPARAISON DE CAPS

69 — POINT P OU Q ? (NON / OUI)

70 — LOCALISATION

71 — CORRECTION DE LECTURE DE CAP

72 — CORRECTION DE MESURE DE DISTANCE

73 — CALCUL DE DISTANCE AU POINT DE MODELISATION SUIVANT

74 — DELAI

75 — MESURE DE DISTANCE

76 — COMPARAISON DE DISTANCES

FIG. 9

Office européen
des brevets

**RAPPORT DE RECHERCHE EUROPEENNE**

Numero de la demande

EP 90 40 1658

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,Y<br>A | EP-A-0 146 428 (OFFICE NATIONAL D'ETUDES ET DE RECHERCHES AEROSPATIALES)<br>* page 15, ligne 1 - page 18, ligne 36; figures 1-9 *<br>--- | 1,4,3,<br>5-7 | G 05 D 1/03<br>G 05 D 1/02 |
| D,X<br>D,Y | EP-A-0 142 594 (AUTOMAX KABUSHIKI KAISHA)<br>* page 5, ligne 4 - page 11, ligne 20; figures 1-9 *<br>--- | 1,4,2,<br>7, 8 | |
| D,X | PATENT ABSTRACTS OF JAPAN vol. 12, no. 284 (P-740) 04 août 1988, & JP-A-63 062006 (NISSAN MOTOR CO LTD) 18 mars 1988,<br>* le document en entier *<br>--- | 1 | |
| X,Y | PATENT ABSTRACTS OF JAPAN vol. 8, no. 215 (P-305) 02 octobre 1984, & JP-A-59 099507 (KUBOTA TEKKO KK) 08 juin 1984,<br>* le document en entier *<br>--- | 1,4, 6 | |
| Y | WO-A-8 505 474 (THE GENERAL ELECTRIC COMPANY)<br>* page 5, ligne 1 - page 16, ligne 15; figures 1-10 *<br>--- | 4, 6 | **DOMAINES TECHNIQUES RECHERCHES (Int. Cl.5)**<br><br>G 05 D<br>G 06 F |
| Y,A | EP-A-0 236 614 (SI HANDLING SYSTEMS,INC.)<br>* page 4, ligne 24 - page 6, ligne 4; figures 1-13 *<br>--- | 1,7, 8 | |
| Y | PATENT ABSTRACTS OF JAPAN vol. 12, no. 194 (P-713) 07 juin 1988, & JP-A-63 000604 (KUBOTA LTD) 05 janvier 1988,<br>* le document en entier *<br>---                    -/- | 1 | |

Le présent rapport a été établi pour toutes les revendications

| Lieu de la recherche | Date d'achèvement de la recherche | Examinateur |
|---|---|---|
| LA HAYE | 13-09-1990 | FOURRICHON,P.M.L. |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 159 553 (NDC TECHNOLOGIES INC.)<br>* page 8, ligne 11 - page 15, ligne 12;<br>figures 1-8 *<br>--- | 1 | |
| A | EP-A-0 296 405 (ARNEX HANDELSBOLAG)<br>* colonne 3, ligne 40 - colonne 5,<br>ligne 46; figures 1-5 *<br>----- | 1 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 13-09-1990 | FOURRICHON,P.M.L. |